# EUROPÄISCHE PATENTSCHRIFT

(11) **EP 4 227 030 B1**
(45) Veröffentlichungstag und Bekanntmachung des Hinweises auf die Patenterteilung: **02.12.2026**
(21) Anmeldenummer: 22156070.9
(22) Anmeldetag: 10.02.2022
(51) Int. Cl.: B23B 27/00, B23B 51/00, B23B 51/06

(54) **ZERSPANUNGSWERKZEUG**
CHIPPING TOOL
OUTIL D'USINAGE PAR ENLÈVEMENT DES COPEAUX

(43) Veröffentlichungstag der Anmeldung: 16.08.2023
(73) Patentinhaber: CERATIZIT Austria Gesellschaft m.b.H., 6600 Reutte (AT)
(72) Erfinder: VENTURINI, Remus, 6600 Reutte (AT); SCHLEINKOFER, Uwe, 6600 Reutte (AT); HINRICHS, Marco, 21641 Apensen (DE); HINTZE, Wolfgang, 21077 Hamburg (DE)
(74) Vertreter: Ciesla, Dirk

(56) Entgegenhaltungen:
- WO-A1-02/45892
- WO-A1-2008/002145
- JP-U- H 073 903
- US-B1- 10 179 367

## Beschreibung

Die vorliegende Erfindung betrifft ein Zerspanungswerkzeug nach dem Oberbegriff von Anspruch 1.

WO 02/45892 A1 beschreibt ein Werkzeug zur Bearbeitung metallischer Materialien mit einem Werkzeugkörper, an dessen Vorderende zumindest ein Schneideinsatz angeordnet ist, wobei der Werkzeugkörper mit einem oder mehreren Dämpfelementen versehen ist.

EP 0 642 859 B1 beschreibt ein Zerspanungswerkzeug, das als ein Multifunktionswerkzeug zum Bohren und zur Drehbearbeitung ausgebildet ist. Das Zerspanungswerkzeug hat einen Grundkörper, der sich entlang einer Längsachse erstreckt und ein erstes Ende zur Verbindung mit einer Werkzeugaufnahme und ein freies zweites Ende aufweist, an dem ein Sitz zur Aufnahme eines auswechselbaren Schneideinsatzes ausgebildet ist. In einem Querschnitt senkrecht zu der Längsachse hat das Zerspanungswerkzeug eine unsymmetrische Ausgestaltung, bei der sich eine einzelne Spannut über einen Winkelbereich von wesentlich kleiner als 180° erstreckt und sich ein Stegbereich des Grundkörpers über einen Winkelbereich von wesentlich mehr als 180° erstreckt. Bei einer Nutzung des Zerspanungswerkzeugs in einer spanabhebenden Bearbeitung, bei der der Schneideinsatz mit dem zu bearbeitenden Werkstück in Eingriff gelangt, wirken auf den Grundkörper Kräfte insbesondere in Richtungen senkrecht zur Längsachse des Grundkörpers ein. Aufgrund dieser wirkenden Kräfte werden Vibrationen bzw. Schwingungen hauptsächlich in einer Ebene senkrecht zur Längsachse des Grundkörpers generiert, die unter anderem abhängig von der durchgeführten spanabhebenden Bearbeitung und deren Zerspanungsparametern, wie Schnittgeschwindigkeit, Schnitttiefe, etc., sind und in der Ebene auch anisotrop auftreten können. Diese Schwingungen wirken sich nachteilig auf die erzeugten Oberflächen an dem bearbeiteten Werkstück und auf die Lebensdauer des Zerspanungswerkzeugs aus und können schädlichen bzw. störenden Lärm verursachen. In einem gewissen Umfang kann solchen Schwingungen konstruktiv und durch eine angepasste Wahl des Materials des Grundkörpers entgegengewirkt werden. Dies ist aber mit erhöhten Kosten verbunden und stößt insbesondere bei solchen Zerspanungswerkzeugen mit geringem Durchmesser und mit relativ großer axialer Länge an Grenzen.

Es ist Aufgabe der vorliegenden Erfindung, ein verbessertes Zerspanungswerkzeug bereitzustellen, mit dem die Prozessstabilität verbessert werden kann.

Diese Aufgabe wird durch ein Zerspanungswerkzeug nach Anspruch 1 gelöst. Vorteilhafte Weiterbildungen sind in den abhängigen Ansprüchen angegeben.

Aufgrund der Ausgestaltung des Grundkörpers mit einer Spannut, die sich über einen Winkelbereich kleiner als 180° erstreckt und einem verbleibenden Stegbereich des Grundkörpers, der sich über einen Winkelbereich von mehr als 180° erstreckt, ist der Grundkörper im Querschnitt sehr asymmetrisch und grundsätzlich eher anfällig für Schwingungen in Richtungen senkrecht zu dessen Längsachse. Da auf der axialen Höhe des Sitzes der Dämpfungsmechanismus angeordnet ist, können solche Schwingungen in den Richtungen senkrecht zur Längsachse aber sehr effektiv reduziert werden und es werden somit eine verbesserte Bauteilgüte und eine höhere Lebensdauer des Zerspanungswerkzeugs sowie eine Lärmreduzierung erzielt.

Wenn der Massekörper über ein viskoelastisches Material gegenüber dem Grundkörper gelagert ist, kann der Dämpfungsmechanismus in besonders kostengünstiger und einfacher Weise über die Masse des Massekörpers und die Elastizität und Dämpfung des viskoelastischen Materials eingestellt werden. Insbesondere können die Steifigkeit und die Dämpfung in diesem Fall auch in einfacher Weise in zwei zueinander orthogonalen Richtungen, die orthogonal zur Längsachse sind, mit unterschiedlichen Dämpfungseigenschaften versehen werden, z.B. durch eine variierende Dicke des viskoelastischen Materials, durch eine bezüglich der Längsachse schräge Anordnung des viskoelastischen Materials, etc.

Gemäß einer Weiterbildung ist der Massekörper derart zwischen zwei Feder-Dämpfungs-Elementen gehalten, dass diese bei Auslenkung des Massekörpers in Richtungen senkrecht zur Längsachse des Grundkörpers überwiegend eine Schubdeformation erfahren. Die Feder-Dämpfungs-Elemente können zusätzlich zu der Schubdeformation auch eine, allerdings geringere Biegedeformation erfahren. Aufgrund der überwiegenden Schubdeformation ist die Steifigkeit in der Ebene senkrecht zur Längsachse zunächst unabhängig von der Form der Querschnittsfläche und ohne weitere Maßnahmen zunächst nicht richtungsabhängig, sodass ein hohes Maß an Flexibilität bei der geometrischen Auslegung des Dämpfungsmechanismus unter Berücksichtigung des zur Verfügung stehenden Bauraums gegeben ist. Die Feder-Dämpfungs-Elemente können bevorzugt aus viskoelastischem Material gebildet sein.

Gemäß einer Weiterbildung sind die Feder-Dämpfungs-Elemente bezüglich der Längsachse des Grundkörpers seitlich durch einen Spalt von dem Material des Grundkörpers beabstandet. In diesem Fall kann zuverlässig erreicht werden, dass die Feder-Dämpfungs-Elemente überwiegend eine Schubdeformation erfahren.

Gemäß einer Weiterbildung ist der Massekörper derart gehalten, dass die Nachgiebigkeit in einer Ebene senkrecht zur Längsachse des Grundkörpers anisotrop ist. In diesem Fall kann der Dämpfungsmechanismus besonders gut an durch die Asymmetrie des Grundkörpers im Querschnitt verursachte unterschiedliche Eigenfrequenzen in verschiedenen Schwingungsrichtungen senkrecht zur Längsachse angepasst werden. Die anisotrope Nachgiebigkeit kann z.B. durch eine variierende Dicke eines viskoelastischen Materials oder durch eine Verkippung einer Lage viskoelastischen Materials gegenüber der Ebene senkrecht zur Längsachse bereitgestellt werden.

Gemäß einer Weiterbildung ist der Massekörper derart gehalten, dass in einer ersten Richtung senkrecht zur Längsachse des Grundkörpers eine erste Schubsteifigkeit gegeben ist und in einer zu der Längsachse und der ersten Richtung senkrechten zweiten Richtung eine zweite Schubsteifigkeit gegeben ist, die von der ersten Schubsteifigkeit verschieden ist. In diesem Fall können unterschiedliche Eigenfrequenzen in zueinander senkrechten Richtungen in einer Ebene senkrecht zur Längsachse sehr effektiv gezielt gedämpft werden. Bevorzugt kann die zweite Schubsteifigkeit um mindestens 5 %, bevorzugt um mindestens 10%, besonders bevorzugt um mindestens 20% von der ersten Schubsteifigkeit verschieden sein.

Wenn der Massekörper frei von unmittelbarem Kontakt mit dem Material des Grundkörpers gelagert ist, können unerwünschte Schwingungen besonders effektiv gedämpft werden.

Gemäß einer Weiterbildung ist der Massekörper bezüglich der Längsachse des Grundkörpers seitlich durch einen Spalt von dem Material des Grundkörpers beabstandet. In diesem Fall kann besonders einfach und zuverlässig eine Nachgiebigkeit unter überwiegender Schubdeformation viskoelastischen Materials realisiert werden.

Gemäß einer Weiterbildung ist die Ausnehmung gegenüber der Spannut geschlossen ausgebildet. In diesem Fall ist der Dämpfungsmechanismus gut gegenüber erzeugten Spänen geschützt angeordnet.

Wenn die Ausnehmung gegenüber einem Außenumfang des Grundkörpers geschlossen ausgebildet ist, ist der Dämpfungsmechanismus zuverlässig gegen Beschädigung und Verschmutzung geschützt.

Gemäß einer Weiterbildung ist die Ausnehmung stirnseitig ausgehend von dem zweiten Ende in den Grundkörper eingebracht und mit einem Deckel verschlossen. In diesem Fall ist eine besonders einfache und kostengünstige Herstellung, z.B. durch Ausbilden einer stirnseitigen Bohrung, ermöglicht, bei der der Dämpfungsmechanismus zuverlässig geschützt ist, sodass eine lange Lebensdauer des gedämpften Werkzeugs erreicht wird.

Gemäß einer Weiterbildung ist in dem Grundkörper zumindest ein Kühlmittelkanal zum Zuführen von Kühlmittel zu dem zweiten Ende ausgebildet und die Ausnehmung ist getrennt von dem Kühlmittelkanal ausgebildet. In diesem Fall können sowohl eine effiziente Dämpfung als auch eine gute Kühlung bei dem Zerspanungswerkzeug unabhängig voneinander bereitgestellt werden und die Dämpfungseigenschaften werden durch den Kühlmittelstrom nicht nachteilig beeinflusst.

Gemäß einer Weiterbildung hat der Massekörper eine längliche Ausgestaltung mit einer Längsachse, die sich im Wesentlichen parallel zur Längsachse des Grundkörpers erstreckt. In diesem Fall ist eine konstruktiv sehr einfache und platzsparende Ausbildung erreicht, die auch in Zerspanungswerkzeugen mit geringen Durchmessern eine effiziente Dämpfung ermöglicht. Die Längsachse kann sich bevorzugt parallel zur Längsachse des Grundkörpers erstrecken, es sind jedoch auch geringe Abweichungen von bis zu 10° grundsätzlich möglich.

Gemäß einer Weiterbildung ist der Masseschwerpunkt des Massekörpers von der Längsachse des Grundkörpers beabstandet. In diesem Fall kann das Zerspanungswerkzeug mit einer tiefen Spannut versehen werden, die sich bis zur Stirnseite und bis zur Längsachse des Grundkörpers erstreckt, sodass das Zerspanungswerkzeug auch zum Bohren ins volle Material ausgebildet werden kann.

Wenn der Massekörper eine höhere Dichte als das Material des Werkzeuggrundkörpers aufweist, kann auch bei einem kleinen zur Verfügung stehenden Bauraum für den Dämpfungsmechanismus eine effiziente Dämpfung bereitgestellt werden.

Gemäß einer Weiterbildung ist das Zerspanungswerkzeug als ein Werkzeug zum Bohren und/oder für eine Innenbearbeitung durch Drehen ausgebildet. Bei derartigen Werkzeugen besteht eine besonders ausgeprägte Neigung zu unerwünschten Schwingungen in einer Ebene senkrecht zur Längsachse des Grundkörpers. Das Zerspanungswerkzeug kann dabei insbesondere als ein Multifunktionswerkzeug für eine Bohr- und Drehbearbeitung ausgebildet sein.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Darstellung eines Zerspanungswerkzeugs gemäß einer ersten Ausführungsform;
- Fig. 2:: eine schematische Stirnansicht des Zerspanungswerkzeugs aus Fig. 1;
- Fig. 3:: eine schematische Darstellung eines Schnittes entlang der Linie A-A in Fig. 2;
- Fig. 4:: eine schematische Darstellung eines Schnittes entlang der Linie B-B in Fig. 3;
- Fig. 5:: eine perspektivische Darstellung eines Dämpfungsmechanismus bei der ersten Ausführungsform;
- Fig. 6:: eine perspektivische Explosionsdarstellung des Dämpfungsmechanismus bei der ersten Ausführungsform;
- Fig. 7:: eine perspektivische Explosionsdarstellung des Zerspanungswerkzeugs gemäß der ersten Ausführungsform;
- Fig. 8:: eine perspektivische Explosionsdarstellung eines Zerspanungswerkzeugs gemäß einer ersten Abwandlung der ersten Ausführungsform;
- Fig. 9:: eine perspektivische Explosionsdarstellung eines Zerspanungswerkzeugs gemäß einer zweiten Abwandlung der ersten Ausführungsform;
- Fig. 10:: eine schematische Stirnansicht eines Zerspanungswerkzeugs gemäß einer zweiten Ausführungsform, wie sich aus den folgenden Fig. 11 bis Fig. 13 ergibt;
- Fig. 11:: eine schematische Darstellung eines Schnittes entlang einer Linie C-C in Fig. 10 bei der zweiten Ausführungsform ohne Schneideinsatz;
- Fig. 12:: eine perspektivische Darstellung eines Dämpfungsmechanismus bei der zweiten Ausführungsform;
- Fig. 13:: eine Explosionsdarstellung des Dämpfungsmechanismus bei der zweiten Ausführungsform;
- Fig. 14:: eine Explosionsdarstellung eines Dämpfungsmechanismus gemäß einer dritten Ausführungsform;
- Fig. 15:: eine schematische Schnittdarstellung der Explosionsdarstellung aus Fig. 14;
- Fig. 16:: eine schematische Schnittdarstellung des Dämpfungsmechanismus gemäß der dritten Ausführungsform in Blickrichtung entlang D-D in Fig. 15;
- Fig. 17:: eine Fig. 3 entsprechende schematische Schnittdarstellung bei einer weiteren Abwandlung; und
- Fig. 18:: eine schematische Schnittdarstellung der weiteren Abwandlung mit Blickrichtung entlang E-E in Fig. 17.

### ERSTE AUSFÜHRUNGSFORM

Eine erste Ausführungsform der vorliegenden Erfindung wird nachfolgend unter Bezugnahme auf die Zeichnungen eingehender beschrieben.

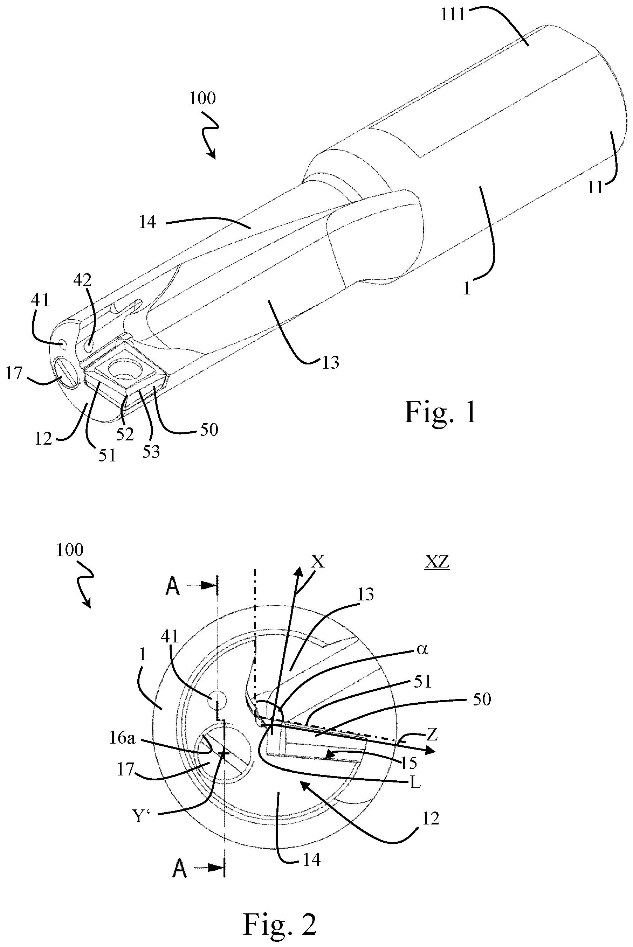

**Bei der ersten** Ausführungsform ist das Zerspanungswerkzeug 100 als ein Multifunktionswerkzeug für eine Bohr- und Drehbearbeitung ausgebildet, wie in den Fig. 1 bis Fig. 7 zu sehen ist. Das Multifunktionswerkzeug kann dabei so ausgelegt sein, dass ein Bohren in Vollmaterial ermöglicht ist, oder derart, dass nur ein Aufbohren einer bereits existierenden Bohrung ermöglicht ist.

Das Zerspanungswerkzeug 100 hat einen Grundkörper 1, der sich entlang einer Längsachse L erstreckt. Der Grundkörper 1 hat ein erstes Ende 11, das zur Verbindung mit einer (nicht dargestellten) Werkzeugaufnahme ausgebildet ist, und ein freies zweites Ende 12. Bei der dargestellten Ausführungsform hat das Zerspanungswerkzeug 100 eine im Wesentlichen zylindrische Grundform und kann sowohl als stehendes Werkzeug bei rotierendem Werkstück eingesetzt werden als auch als rotierendes Werkzeug bei ruhendem Werkstück. Bei dem konkret dargestellten Beispiel ist das erste Ende 11 mit im Wesentlichen rotationssymmetrischer Form mit einer abgeflachten Klemmfläche 111 für eine drehfeste Aufnahme in einer entsprechenden Werkzeugaufnahme ausgebildet.

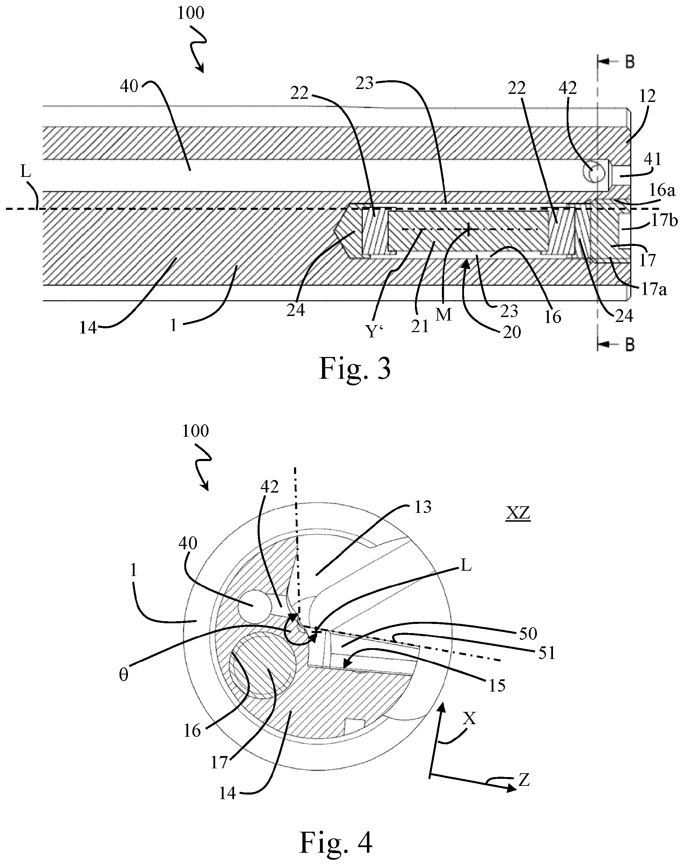

In dem Grundkörper 1 ist eine Spannut 13 ausgebildet, die sich ausgehend von dem freien zweiten Ende 12 über einen Teil der axialen Länge des Grundkörpers 1 in Richtung des ersten Endes 11 erstreckt. Wie insbesondere in Fig. 2 und Fig. 4 zu sehen ist, ist die Spannut 13 derart ausgebildet, dass sie sich zumindest bis nahe der Längsachse L in das Material des Grundkörpers 1 erstreckt, und kann sich, wenn ein Bohren in Vollmaterial ermöglicht sein soll auch bis zur Längsachse L erstrecken. Die Spannut 13 hat im Querschnitt senkrecht zur Längsachse L im Wesentlichen die Grundform eines Tortenstücks oder Kreissektors und erstreckt sich über einen Winkelbereich α von weniger als 180°, insbesondere weniger als 150°, bevorzugt weniger als 120°, wie in Fig. 2 zu sehen ist. Es ist nur eine Spannut 13 in dem Grundkörper 1 ausgebildet, sodass der verbleibende Stegbereich 14 des Grundkörpers 1 in dem axialen Bereich, in dem die Spannut 13 ausgebildet ist, im Wesentlichen die Form eines Kreissektors hat, der sich über einen Winkelbereich θ von mehr als 180° erstreckt, insbesondere von mehr als 210°, bevorzugt von mehr als 240°, wie in Fig. 4 zu sehen ist.

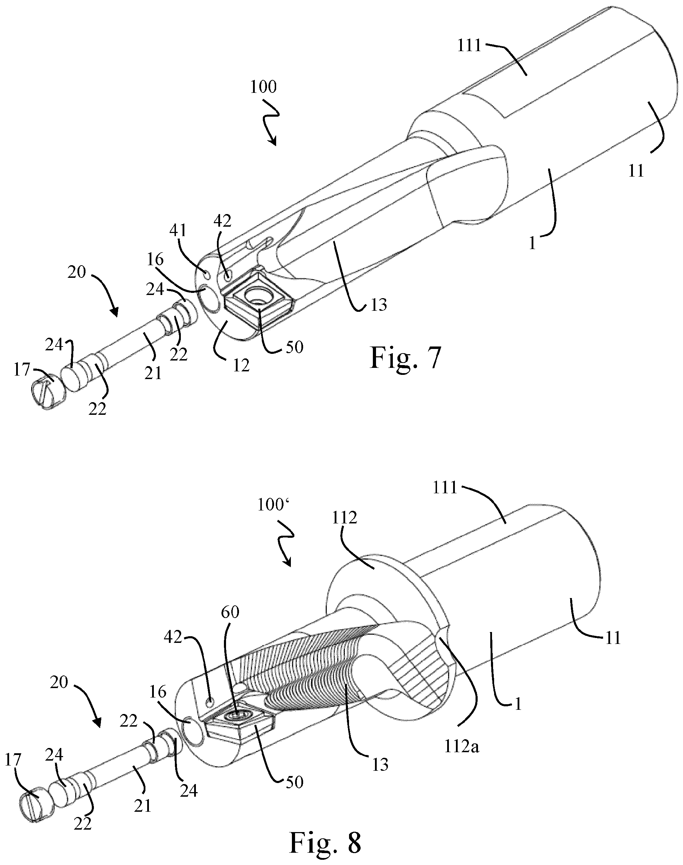

Obwohl sich die Spannut 13 bei dem konkret dargestellten Beispiel gewendelt entlang dem Grundkörper 1 erstreckt, wie es z.B. in den Fig. 1 und Fig. 7 zu sehen ist, ist es in einer Abwandlung z.B. auch möglich, die Spannut 13 ungewendelt auszubilden, das Zerspanungswerkzeug also gerade genutet auszubilden.

In dem Bereich des zweiten Endes 12 ist in dem Grundkörper 1 anschließend an die Spannut 13 ein Sitz 15 zur Aufnahme eines auswechselbaren Schneideinsatzes 50 ausgebildet, wie insbesondere in den Fig. 1, Fig. 2, Fig. 4 und Fig. 7 zu sehen ist. Bei der dargestellten ersten Ausführungsform hat das Zerspanungswerkzeug 100 nur einen einzigen Sitz 15 zur Aufnahme eines auswechselbaren Schneideinsatzes 50. Der Sitz 15 ist derart ausgebildet, dass der Schneideinsatz 50 sowohl in axialer Richtung als auch in radialer Richtung von dem zweiten Ende 12 vorsteht, wobei sich die Begriffe axiale Richtung und radiale Richtung auf die Längsachse L beziehen. Der Sitz 15 ist dabei dazu ausgebildet, dass der Schneideinsatz 50 mittels einer (nicht dargestellten) Befestigungsschraube an dem Sitz 50 befestigt werden kann, wie es in dem technischen Gebiet der Zerspanungswerkzeuge bekannt ist.

Wie insbesondere in den Fig. 1, Fig. 2 und Fig. 7 zu sehen ist, erstreckt sich eine stirnseitige Schneide 51 des Schneideinsatzes 50 im Wesentlichen quer zur Längsachse L. Wenn das Zerspanungswerkzeug 100 zum Bohren in Vollmaterial ausgebildet sein soll, erstreckt sich die stirnseitige Schneide 51 nach radial innen bis über die Längsachse L. Bei einer Auslegung des Zerspanungswerkzeugs 100 derart, dass es nur zum Aufbohren geeignet ist, muss sich die stirnseitige Schneide 51 nicht bis zur Längsachse L erstrecken.

Die stirnseitige Schneide 51 geht über eine Schneidecke 52 in eine umfangsseitige Schneide 53 über, wie insbesondere in Fig. 1 zu sehen ist. Bei der konkret dargestellten ersten Ausführungsform erstreckt sich die umfangsseitige Schneide 53 im Wesentlichen längs der Längsachse L.

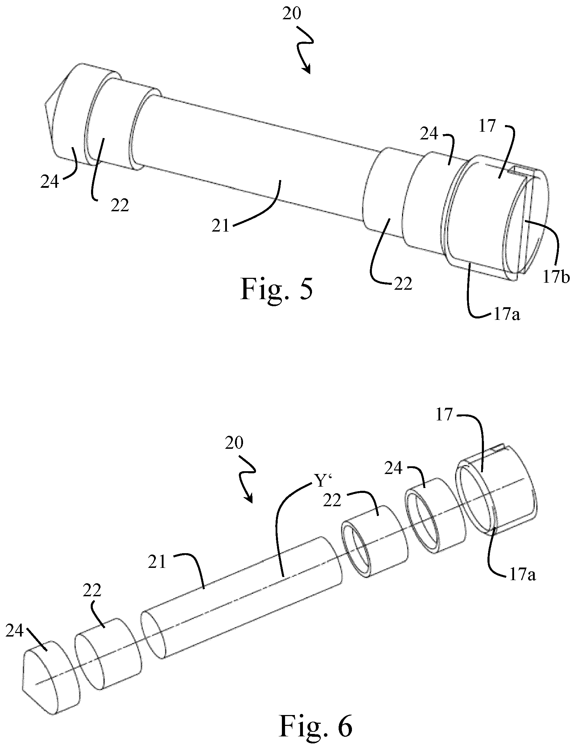

Bei dem Zerspanungswerkzeug 100 gemäß der ersten Ausführungsform ist in dem Stegbereich 14 des Grundkörpers 1 ferner eine Ausnehmung 16 vorgesehen, in der ein Dämpfungsmechanismus 20 angeordnet ist, der im Folgenden unter Bezug auf die Fig. 5 bis Fig. 7 eingehender beschrieben wird.

Die Ausnehmung 16 ist in dem Stegbereich 14 auf der axialen Höhe des Sitzes 15 ausgebildet, d.h. es gibt zumindest einen Querschnitt des Zerspanungswerkzeugs 100 senkrecht zur Längsachse L, in dem sich sowohl die Ausnehmung 16 als auch der Sitz 15 befinden. Wie insbesondere in den Fig. 3 und Fig. 4 zu sehen ist, ist die Ausnehmung 16 sowohl gegenüber der Spannut 13 als auch gegenüber einem Außenumfang des Grundkörpers 1 geschlossen ausgebildet, sodass sich diese im Inneren des Stegbereichs 14 befindet.

Bei dem konkret dargestellten Beispiel ist die Ausnehmung 16 ausgehend von dem zweiten Ende 12 in den Grundkörper 1 eingebracht und mit einem Deckel 17 verschlossen. Z.B. kann die Ausnehmung 16 ausgehend von dem zweiten Ende 12 als Sacklochbohrung in dem Stegbereich 14 ausgebildet sein, was eine besonders einfache und platzsparende Herstellung ermöglicht. Bei dem dargestellten Beispiel ist die Ausnehmung 16 mit einem kreisförmigen Querschnitt ausgebildet und angrenzend an das zweite Ende 12 mit einem Innengewinde 16a versehen, das mit einem entsprechenden Außengewinde 17a an dem Deckel 17 zusammenwirkt, sodass die Ausnehmung 16 zuverlässig und einfach verschlossen werden kann. Dazu hat der Deckel 17 an seiner Stirnseite eine Eingriffsstruktur 17b für ein Schraubwerkzeug, die z.B. als ein Schlitz für einen Schraubenzieher ausgebildet sein kann.

Der in der Ausnehmung 16 angeordnete Dämpfungsmechanismus 20 weist einen Massekörper 21 auf, der vorzugsweise eine größere Dichte als das Material des Grundkörpers 1 hat. Der Massekörper 21 ist in der Ausnehmung 16 frei von unmittelbarem Kontakt mit dem Material des Grundkörpers 1 gelagert, wie nachfolgend noch eingehender beschrieben wird. Der Massekörper 21 hat eine längliche Erstreckung mit einer Längsachse Y', die sich im Wesentlichen parallel zu der Längsachse L des Grundkörpers 1 erstreckt, aber nicht koaxial zu dieser verläuft, sondern seitlich zu dieser versetzt angeordnet ist, wie insbesondere in Fig. 2 und Fig. 3 zu sehen ist.

Folglich ist der Masseschwerpunkt M des Massekörpers 21 von der Längsachse L des Grundkörpers 1 beabstandet und insbesondere in den Bereich des Stegbereichs 14 verschoben.

Der Massekörper 21 ist bezüglich der Längsachse L des Grundkörpers 1 seitlich durch einen Spalt 23 von dem Material des Grundkörpers 1 beabstandet, wie in Fig. 3 zu sehen ist. In einer besonders kostengünstig zu fertigenden Ausgestaltung kann der Massekörper 21 z.B. im Wesentlichen zylindrisch ausgebildet sein und in einer ebenfalls zylindrischen Bohrung, die einen etwas größeren Querschnitt hat, als Ausnehmung 16 aufgenommen sein.

Der Massekörper 21 ist in Richtung des ersten Endes 11 und in Richtung des zweiten Endes 12 jeweils durch viskoelastisches Material in der Ausnehmung 16 gehalten. Bei der ersten Ausführungsform ist der Massekörper 21 derart zwischen zwei Feder-Dämpfungs-Elementen 22 gehalten, dass er federnd und dämpfend in der Ausnehmung 16 gelagert ist, wobei die Feder-Dämpfungs-Elemente 22 ebenfalls seitlich von dem Material des Grundkörpers 1 beabstandet sind. Eines der Feder-Dämpfungs-Elemente 22 ist auf der Seite des Massekörpers 21 in Richtung des ersten Endes 11 des Grundkörpers 1 angeordnet und das andere der Feder-Dämpfungs-Elemente 22 ist auf der Seite des Massekörpers 21 in Richtung des zweiten Endes 12 des Grundkörpers 1 angeordnet, sodass der Massekörper in einer zu der Längsachse L des Grundkörpers 1 ersten Richtung X und in einer zu der Längsachse L und der ersten Richtung X orthogonalen zweiten Richtung Z jeweils derart federnd und dämpfend auslenkbar ist, dass die Feder-Dämpfungs-Elemente 22 überwiegend eine Schubdeformation erfahren. Die erste Richtung X und die zweite Richtung Z bestimmen eine in Fig. 2 und Fig. 4 schematisch angegebene Ebene XZ senkrecht zur Längsachse L, in der der Massekörper 21 unter überwiegender Schubdeformation der Feder-Dämpfungs-Elemente 22 federnd und dämpfend auslenkbar ist.

Bei dem dargestellten Ausführungsbeispiel sind die beiden Feder-Dämpfungs-Elemente 22 jeweils scheibenförmig an den beiden Stirnseiten des Massekörpers 21 angeordnet und haben im Wesentlichen dieselbe Dicke. Bei der konkret dargestellten Ausgestaltung haben die Feder-Dämpfungs-Elemente 22 jeweils einen umlaufenden Rand, der die Stirnseite des Massekörpers 21 formschlüssig umgreift, um den Massekörper 21 zu positionieren und zu halten, wie insbesondere in den Fig. 3 und Fig. 6 zu sehen ist. Es sind jedoch auch andere Ausgestaltungen möglich, beiden denen z.B. die Feder-Dämpfungs-Elemente 22 unterschiedliche Dicken aufweisen und/oder die Feder-Dämpfungs-Elemente 22 und die Stirnseiten des Massekörpers 21 so aneinander angepasst sind, dass sie formschlüssig ineinander eingreifen und den Massekörpers 21 in dieser Weise in seiner Ruhelage in der Ausnehmung fixieren. In einer besonders einfachen Ausgestaltung ist es z.B. möglich, den Massekörpers 21 stirnseitig am Rand mit Fasen zu versehen und ihn zwischen zwei O-Ringen als Feder-Dämpfungs-Elemente 22 zu lagern. Solche O-Ringe können alternativ z.B. auch in stirnseitigen Nuten an dem Massekörper 21 gehalten sein oder in umfangsseitigen Nuten. Alternativ dazu können die Feder-Dämpfungs-Elemente 22 z.B. auch mit den Stirnseiten des Massekörpers 21 verklebt sein.

Bei dem konkret dargestellten Ausführungsbeispiel sind in Richtung des ersten Endes 11 bzw. in Richtung des zweiten Endes 12 an das jeweilige Feder-Dämpfungs-Element 22 angrenzend noch Distanzstücke 24 vorgesehen, die eine zuverlässigere Positionierung in der Ausnehmung 16 ermöglichen und die im Betrieb auftretenden Schwingungen von dem Grundkörper 1 auf den Dämpfungsmechanismus übertragen. Wie insbesondere in Fig. 3 zu sehen ist, befindet sich ein solches Distanzstück 24 zwischen dem einen der beiden Feder-Dämpfungs-Elemente 22 und dem Deckel 17 angeordnet und das andere Distanzstück 24 ist zwischen dem anderen Feder-Dämpfungs-Element 22 und dem geschlossenen Ende der Ausnehmung 16 angeordnet. Bei dem konkret dargestellten Ausführungsbeispiel haben die Distanzstücke 24 jeweils einen umlaufenden Rand, der dazu ausgebildet ist, das Feder-Dämpfungs-Element 22 zu umgreifen und es in dieser Weise von dem Material des Grundkörpers 1 beabstandet zu halten.

Wie insbesondere in den Fig. 1 bis Fig. 4 zu sehen ist, ist in dem Grundkörper 1 ein Kühlmittelkanal 40 zum Zuführen von Kühlmittel zu dem zweiten Ende 12 des Grundkörpers 1 ausgebildet. Der Kühlmittelkanal 40 hat einen (nicht dargestellten) Eintritt an dem ersten Ende 11 des Grundkörpers 1, der z.B. bevorzugt stirnseitig dort ausgebildet sein kann. Der Kühlmittelkanal 40 ist separat zu der Ausnehmung 16 ausgebildet und räumlich von dieser getrennt, sodass er fluidtechnisch von der Ausnehmung 16 getrennt ist.

Bei dem Ausführungsbeispiel hat der Kühlmittelkanal 40 einen ersten Kühlmittelaustritt 41, der sich zu der Stirnseite des Grundkörpers 1 an dem zweiten Ende 12 erstreckt, um dorthin Kühlmittel zuzuführen. Der Kühlmittelkanal 40 hat bei dem Ausführungsbeispiel ferner einen zweiten Kühlmittelaustritt 42, der in der Nähe des Sitzes 15 in die Spannut 13 mündet und über den gezielt Kühlmittel zu einer Spanfläche des Schneideinsatzes 50 zugeführt werden kann. Obwohl diese Ausgestaltung mit den beiden Kühlmittelaustritten 41, 42 besonders bevorzugt ist, ist es jedoch z.B. auch möglich, nur den ersten Kühlmittelaustritt 41 oder nur den zweiten Kühlmittelaustritt 42 vorzusehen oder eine Mehrzahl von ersten und/oder zweiten Kühlmittelaustritten vorzusehen.

### ERSTE ABWANDLUNG

Ein Zerspanungswerkzeug 100' gemäß einer ersten Abwandlung der ersten Ausführungsform ist in Fig. 8 schematisch dargestellt und wird im Folgenden beschrieben, wobei zur Vermeidung von Wiederholungen dieselben Bezugszeichen für entsprechende Komponenten und Bereiche verwendet werden und bereits Beschriebenes nicht erneut beschrieben wird.

Das Zerspanungswerkzeug 100' gemäß der ersten Abwandlung unterscheidet sich im Wesentlichen darin von der zuvor beschriebenen ersten Ausführungsform, dass die axiale Länge des mit der Spannut 13 versehenen Bereichs des Grundkörpers 1 etwas kürzer ausgebildet ist, die Spannut 13 etwas stärker verdrallt ausgebildet ist und zwischen dem mit der Spannut 13 versehenen Bereich des Grundkörpers 1 und dem zur Verbindung mit einer Werkzeugaufnahme ausgebildeten ersten Ende 11 ein radial umlaufender Vorsprung 112 ausgebildet ist, der dazu dient, eine bessere Abstützung an der Werkzeugaufnahme bereitzustellen. Der radial umlaufende Vorsprung 112 hat ferner zumindest eine seitliche Ausnehmung 112a zur Aufnahme einer an der Werkzeugaufnahme angeordneten Kühlmitteldüse (nicht gezeigt) zur externen Kühlmittelzuführung in den Bereich des Sitzes 15 bzw. der Spannut 13.

In Fig. 8 ist ferner auch die Befestigungsschraube 60 zum Befestigen des Schneideinsatzes 50 an dem Sitz 15 dargestellt.

Auch bei der ersten Abwandlung ist in dem Grundkörper 1 auf der axialen Höhe des Sitzes 15 eine Ausnehmung 16 ausgebildet, in der ein Dämpfungsmechanismus 20 aufgenommen ist, der im Wesentlichen identisch zu dem zuvor beschriebenen Dämpfungsmechanismus ist. Der Dämpfungsmechanismus 20 weist wiederum einen Massekörper 21, zwei Feder-Dämpfungs-Elemente 22 und zwei Distanzstücke 24 auf.

### ZWEITE ABWANDLUNG

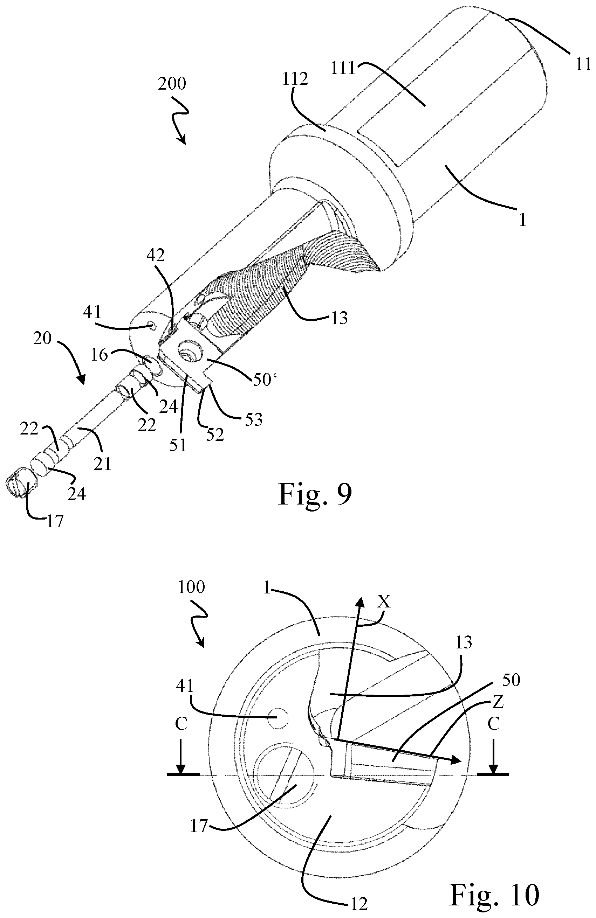

Eine zweite Abwandlung der ersten Ausführungsform ist in Fig. 9 schematisch dargestellt. Das Zerspanungswerkzeug 200 gemäß der zweiten Ausführungsform unterscheidet sich im Wesentlichen nur in der Art des Sitzes 15 und des darin aufgenommenen Schneideinsatzes 50' von der zuvor beschriebenen ersten Abwandlung. Aus diesem Grund werden zur Vermeidung von Wiederholungen zur Bezeichnung entsprechender Komponenten und Bereiche dieselben Bezugszeichen verwendet und die ausführliche Beschreibung wird nicht wiederholt.

Im Unterschied zu der zuvor beschrieben ersten Ausführungsform und deren erster Abwandlung erstreckt sich bei dem Zerspanungswerkzeug 200 gemäß der zweiten Abwandlung die stirnseitige Schneide 51 weiter nach radial außen und steht radial weiter von dem Grundkörper 1 hervor. Ferner erstreckt sich die umfangsseitig an die Schneidecke 52 anschließende umfangsseitige Schneide 53 über eine geringere axiale Länge, sodass mit dem Zerspanungswerkzeug 200 das Ausbilden von Profilen an der Innenwandung einer Bohrung ermöglicht ist.

Der Dämpfungsmechanismus 20 ist bei der zweiten Abwandlung im Wesentlichen wie bei der ersten Ausführungsform und deren erster Abwandlung ausgebildet.

### ZWEITE AUSFÜHRUNGSFORM

Eine zweite Ausführungsform wird im Folgenden unter Bezugnahme auf die Fig. 10 bis Fig. 13 beschrieben. Das Zerspanungswerkzeug 100 gemäß der zweiten Ausführungsform unterscheidet sich nur in der Ausgestaltung des Dämpfungsmechanismus von der zuvor beschriebenen Ausführungsform, sodass zur Vermeidung von Wiederholungen dieselben Bezugszeichen für entsprechende Komponenten und Bereiche verwendet werden und diesbezüglich auf die detaillierte Beschreibung zur ersten Ausführungsform verwiesen wird.

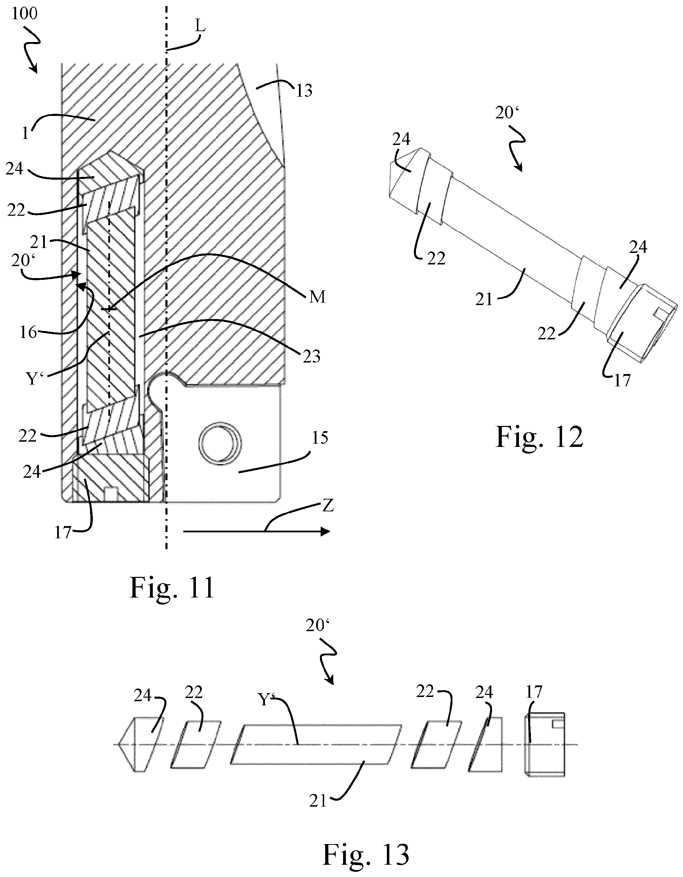

Fig. 10 ist eine im Wesentlichen Fig. 2 entsprechende stirnseitige Ansicht des Zerspanungswerkzeugs 100. Wie in dem in Fig. 11 dargestellten Schnitt entlang der Linie C-C von Fig. 10 (jedoch ohne Schneideinsatz) ersichtlich ist, weist das Zerspanungswerkzeug 100 gemäß der zweiten Ausführungsform einen Dämpfungsmechanismus 20' auf, der gegenüber dem zuvor beschriebenen Dämpfungsmechanismus 20 abgewandelt ist, um anisotrope Dämpfungseigenschaften in einer Ebene senkrecht zur Längsachse L des Grundkörpers 1 bereitzustellen.

Bei der in den Fig. 10 bis Fig. 13 dargestellten zweiten Ausführungsform erstrecken sich die Stirnseiten des Massekörpers 21 nicht in einer Ebene senkrecht zu der Längsachse Y' des Massekörpers 21, sondern sind schräg geneigt angeordnet. Bei dem speziell dargestellten Beispiel verlaufen die Stirnseiten dabei zwar parallel zueinander, aber dies ist nicht zwingend erforderlich. Die beiden Distanzstücke 24 weisen auf ihren den Feder-Dämpfungs-Elementen 22 zugewandten Seiten ebenfalls jeweils eine schräg geneigte Fläche auf, die sich bei dem konkret dargestellten Beispiel jeweils im Wesentlichen parallel zu der dieser zugewandten Stirnseite des Massekörpers 21 erstrecken.

Die scheibenförmigen Feder-Dämpfungs-Elemente 22 sind bei der zweiten Ausführungsform schräg geneigt in der Ausnehmung 16 angeordnet. In dieser Weise wird erreicht, dass die Schubsteifigkeit in der Richtung, in der die schräge Neigung realisiert ist, verschieden von der Schubsteifigkeit in der dazu senkrechten Richtung ist, sodass die Eigenfrequenzen bezüglich Schwingungen in diesen beiden Richtungen voneinander verschieden sind. Bei dem konkret dargestellten Beispiel sind die Distanzstücke 24 mit ihren geneigten Flächen angepasst, um diese Schrägstellung der Feder-Dämpfungs-Elemente 22 zu kompensieren. Alternativ dazu können jedoch z.B. auch die Feder-Dämpfungs-Elemente 22 mit variierendem Querschnitt ausgebildet werden, was ebenfalls zu unterschiedlichen Eigenfrequenzen in den verschiedenen Auslenkungsrichtungen führt.

Das Zerspanungswerkzeug 100 gemäß der zweiten Ausführungsform unterscheidet sich somit darin von der zuvor beschriebenen ersten Ausführungsform und deren Abwandlungen, dass der Massekörper 21 derart federnd und dämpfend in der Ausnehmung 16 gehalten ist, dass die Auslenkbarkeit in der Ebene XZ senkrecht zur Längsachse L anisotrop ist. Mit anderen Worten sind in diesem Fall die Eigenfrequenz bezüglich einer Auslenkung in der ersten Richtung X und die Eigenfrequenz bezüglich einer Auslenkung in der zweiten Richtung Z voneinander verschieden.

Bei der zweiten Ausführungsform ist dies durch eine Auslegung der Feder-Dämpfungs-Elemente 22 derart, dass in der ersten Richtung X eine erste Schubsteifigkeit gegeben ist und in der zweiten Richtung Z eine von der ersten Schubsteifigkeit verschiedene zweite Schubsteifigkeit gegeben ist, realisiert.

Um gezielt die verschiedenen Eigenschwingungen in den verschiedenen Richtungen senkrecht zur Längsachse L zu nutzen, sollte der Dämpfungsmechanismus 20' in der Ausnehmung 16 gegenüber Verdrehung um die Längsachse Y' des Massekörpers 21 gesichert aufgenommen sein. Eine solche Sicherung gegenüber Verdrehung kann z.B. durch ein entsprechendes Verkleben oder durch eine formschlüssige Sicherung mittels einer nicht rotationssymmetrischen Ausgestaltung der Ausnehmung 16 und des Massekörpers 21 oder durch eine entsprechende formschlüssige Führung der Distanzstücke 24 erfolgen.

Obwohl in den Fig. 10 bis Fig. 13 beispielhaft eine spezielle Ausgestaltung gezeigt ist, die eine Anisotropie der Auslenkbarkeit des Massekörpers 21 in Richtungen senkrecht zur Längsachse L bewirkt, gibt es auch eine Vielzahl weiterer Möglichkeiten. Z.B. kann die Form der Stirnseiten des Massekörpers 21 und/oder die jeweilige Form der Feder-Dämpfungs-Elemente 22 in vielfältiger Weise variiert werden, um dies zu erreichen.

### DRITTE AUSFÜHRUNGSFORM

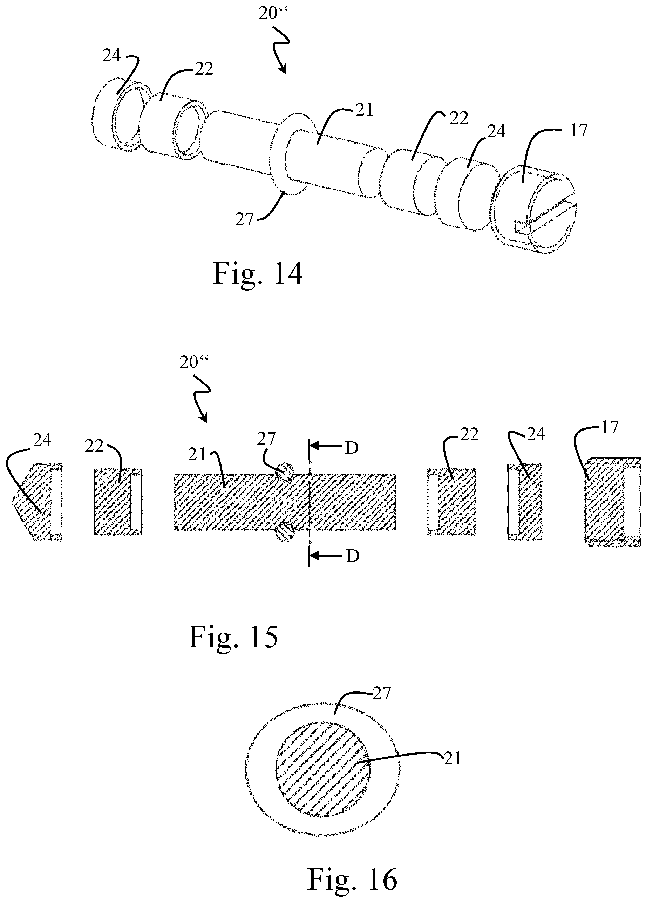

Eine dritte Ausführungsform wird im Folgenden unter Bezugnahme auf die Fig. 14 bis Fig. 16 beschrieben.

Die dritte Ausführungsform unterscheidet sich nur in der Ausgestaltung des Dämpfungsmechanismus von der ersten Ausführungsform, sodass zur Vermeidung von Wiederholungen im Folgenden nur die Unterschiede im Dämpfungsmechanismus beschrieben werden und zur Bezeichnung entsprechender Komponenten und Bereiche dieselben Bezugszeichen verwendet werden.

Anstelle des mit Bezug auf die erste Ausführungsform beschriebenen Dämpfungsmechanismus 20 ist bei der Abwandlung ein Dämpfungsmechanismus 20" vorgesehen, der sich nur darin unterscheidet, dass ein zusätzliches viskoelastisches Element 27 vorgesehen ist, das sich ringförmig um den Umfang des Massekörpers 21 erstreckt und über das sich der Massekörper 21 nur bereichsweise an der Wand der Ausnehmung 16 abstützt, insbesondere nur an zwei zueinander gegenüberliegenden Seiten des Massekörpers 21, um die Steifigkeit bezüglich der Auslenkbarkeit gezielt in einer Richtung zu erhöhen. In dieser Weise können unterschiedliche Eigenfrequenzen bezüglich einer Auslenkung in verschiedenen Richtungen senkrecht zur Längsachse Y' bereitgestellt werden, wie es auch in Bezug auf die zweite Ausführungsform beschrieben wurde.

Dies kann in einfacher Weise z.B., wie in den Fig. 14 bis Fig. 16 schematisch dargestellt ist, durch die Ausbildung des zusätzlichen viskoelastischen Elements 27 mit über den Umfang variierendem Querschnitt realisiert werden. Alternativ dazu ist es aber z.B. auch möglich, das zusätzliche viskoelastische Element 27 ringförmig mit konstantem Querschnitt als O-Ring auszubilden und an dem Massekörper 21 eine umlaufende Rille auszubilden, deren Tiefe über den Umfang variiert und in der das viskoelastische Element 27 angeordnet ist. In einer alternativen Ausgestaltung können z.B. auch mehrere solche zusätzlichen viskoelastischen Elemente 27 vorgesehen werden, die z.B. als O-Ringe ausgebildet sein können.

Es ist unmittelbar ersichtlich, dass es eine Vielzahl weiterer Möglichkeiten gibt, die Nachgiebigkeit in einer Ebene senkrecht zur Längsachse L anisotrop auszugestalten.

### WEITERE ABWANDLUNGEN

Obwohl bei den konkret beschriebenen Ausführungsformen jeweils Multifunktionswerkzeuge für eine Dreh- und Bohrbearbeitung als Zerspanungswerkzeuge gezeigt wurden, kann der beschriebene Dämpfungsmechanismus auch bei anderen Zerspanungswerkzeugen, insbesondere für eine Bohrbearbeitung, vorteilhaft zum Einsatz kommen, deren Grundkörper einen sich in einer Längsrichtung erstreckenden Schaft mit einer asymmetrisch in diesem ausgebildeten Spannut aufweisen, wie es z.B. auch bei einem Einlippenbohrer mit einem auswechselbaren Schneideinsatz typischerweise der Fall ist.

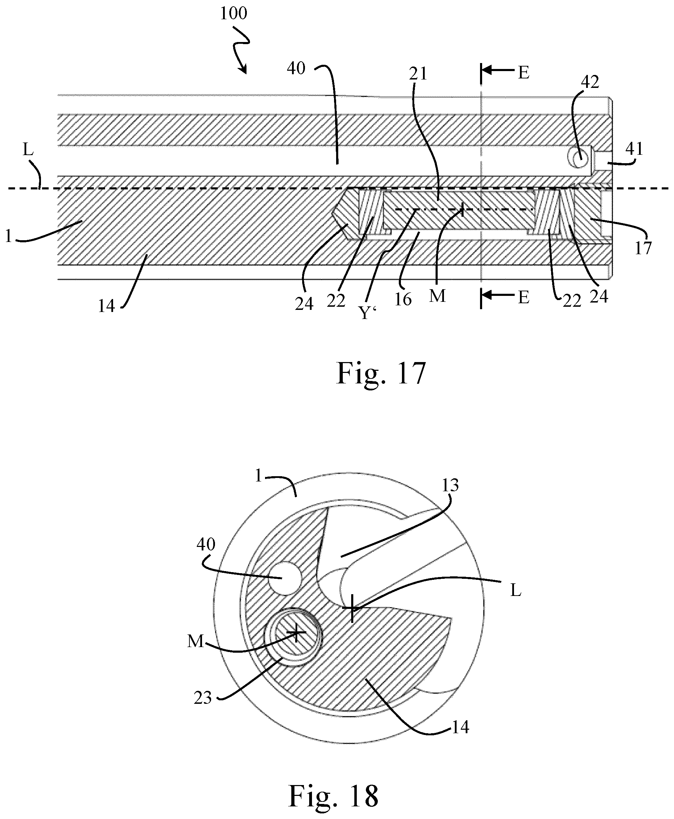

Eine weitere Abwandlung des Dämpfungsmechanismus 20, die insbesondere für im Betrieb rotierende Zerspanungswerkzeuge vorteilhaft ist, ist in den Fig. 17 und Fig. 18 schematisch dargestellt, wobei wiederum dieselben Bezugszeichen verwendet und nur die Unterschiede gegenüber der ersten Ausführungsform beschrieben werden. Bei der weiteren Abwandlung sind die Distanzstücke 24 und optional auch die Feder-Dämpfungs-Elemente 22 derart angepasst, dass der Masseschwerpunkt M des Massekörpers 21 im ruhenden Zustand des Zerspanungswerkzeugs, d.h. im nicht-rotierenden Zustand, etwas nach radial innen in Richtung der Längsachse L verlagert ist. Somit ist der zwischen dem Massekörper 21 und dem Material des Grundkörpers 1 gebildete Spalt 23 auf der von der Längsachse L abgewandten Seite des Massekörpers 21, also radial außen, größer als auf der der Längsachse L zugewandten Seite des Massekörpers 21, also radial innen. In dieser Weise kann eine ausreichende Bewegung des Massekörpers 21 in der Ausnehmung 16, ohne das Material des Grundkörpers 1 zu berühren, auch dann gewährleistet werden, wenn der Massekörper 21 im Betrieb des Zerspanungswerkzeugs aufgrund wirkender Fliehkräfte nach radial außen gedrängt wird.

## Patentansprüche

1. Zerspanungswerkzeug (100, 100', 200) mit
einem Grundkörper (1), der sich entlang einer Längsachse (L) erstreckt und ein erstes Ende (11) zur Verbindung mit einer Werkzeugaufnahme und ein freies zweites Ende (12) aufweist,
wobei der Grundkörper (1) eine sich von dem zweiten Ende (12) über einen Teil der axialen Länge in Richtung des ersten Endes (11) erstreckende Spannut (13) aufweist,
wobei an dem zweiten Ende (12) angrenzend an die Spannut (13) ein Sitz (15) ausgebildet ist zur Aufnahme eines auswechselbaren Schneideinsatzes (50, 50') derart, dass dieser in axialer Richtung und in radialer Richtung von dem zweiten Ende (12) hervorsteht, **dadurch gekennzeichnet, dass** der Grundkörper (1) nur eine einzige Spannut (13) aufweist, die sich in einem Schnitt senkrecht zur Längsachse (L) über einen Winkelbereich (a) kleiner als 180°, bevorzugt kleiner als 150°, mehr bevorzugt kleiner als 120°, erstreckt, sodass sich ein verbleibender Stegbereich (14) des Grundkörpers (1) über einen Winkelbereich (Θ) von mehr als 180°, bevorzugt mehr als 210°, mehr bevorzugt mehr als 240°, erstreckt und
wobei in dem Stegbereich (14) des Grundkörpers (1) auf der axialen Höhe des Sitzes (15) in einer Ausnehmung (16) ein Dämpfungsmechanismus (20, 20', 20") angeordnet ist, der einen federnd und dämpfend gelagerten Massekörper (21) aufweist.

2. Zerspanungswerkzeug nach Anspruch 1, wobei der Massekörper (21) über ein viskoelastisches Material gegenüber dem Grundkörper (1) gelagert ist.

3. Zerspanungswerkzeug nach Anspruch 1 oder 2, wobei der Massekörper (21) derart zwischen zwei Feder-Dämpfungs-Elementen (22) gehalten ist, dass diese bei Auslenkung des Massekörpers (21) in Richtungen (X, Z) senkrecht zur Längsachse (L) des Grundkörpers (1) überwiegend eine Schubdeformation erfahren.

4. Zerspanungswerkzeug nach Anspruch 3, wobei die Feder-Dämpfungs-Elemente (22) bezüglich der Längsachse (L) des Grundkörpers (1) seitlich durch einen Spalt (23) von dem Material des Grundkörpers (1) beabstandet sind.

5. Zerspanungswerkzeug nach einem der vorangehenden Ansprüche, wobei der Massekörper (21) derart gehalten ist, dass die Nachgiebigkeit in einer Ebene (XZ) senkrecht zur Längsachse (L) des Grundkörpers (1) anisotrop ist.

6. Zerspanungswerkzeug nach einem der vorangehenden Ansprüche, wobei der Massekörper (21) derart gehalten ist, dass in einer ersten Richtung (X) senkrecht zur Längsachse (L) des Grundkörpers (1) eine erste Schubsteifigkeit gegeben ist und in einer zu der Längsachse (L) und der ersten Richtung (X) senkrechten zweiten Richtung (Z) eine zweite Schubsteifigkeit gegeben ist, die von der ersten Schubsteifigkeit verschieden ist.

7. Zerspanungswerkzeug nach einem der vorangehenden Ansprüche, wobei der Massekörper (21) frei von unmittelbarem Kontakt mit dem Material des Grundkörpers (1) gelagert ist.

8. Zerspanungswerkzeug nach einem der vorangehenden Ansprüche, wobei der Massekörper (21) bezüglich der Längsachse (L) des Grundkörpers (1) seitlich durch einen Spalt (23) von dem Material des Grundkörpers (1) beabstandet ist.

9. Zerspanungswerkzeug nach einem der vorangehenden Ansprüche, wobei die Ausnehmung (16) gegenüber der Spannut (13) geschlossen ausgebildet ist.

10. Zerspanungswerkzeug nach einem der vorangehenden Ansprüche, wobei die Ausnehmung (16) gegenüber einem Außenumfang des Grundkörpers (1) geschlossen ausgebildet ist.

11. Zerspanungswerkzeug nach einem der vorangehenden Ansprüche, wobei die Ausnehmung (16) stirnseitig ausgehend von dem zweiten Ende (12) in den Grundkörper (1) eingebracht und mit einem Deckel (17) verschlossen ist.

12. Zerspanungswerkzeug nach einem der vorangehenden Ansprüche, wobei in dem Grundkörper (1) zumindest ein Kühlmittelkanal (40) zum Zuführen von Kühlmittel zu dem zweiten Ende (12) ausgebildet ist und die Ausnehmung (16) getrennt von dem Kühlmittelkanal (40) ausgebildet ist.

13. Zerspanungswerkzeug nach einem der vorangehenden Ansprüche, wobei der Massekörper (21) eine längliche Ausgestaltung mit einer Längsachse (Y') hat, die sich im Wesentlichen parallel zur Längsachse (L) des Grundkörpers (1) erstreckt.

14. Zerspanungswerkzeug nach einem der vorangehenden Ansprüche, wobei der Masseschwerpunkt (M) des Massekörpers (21) von der Längsachse (L) des Grundkörpers (1) beabstandet ist.

15. Zerspanungswerkzeug nach einem der vorangehenden Ansprüche, wobei der Massekörper (21) eine höhere Dichte als das Material des Werkzeuggrundkörpers (1) aufweist.

16. Zerspanungswerkzeug (100) nach einem der vorangehenden Ansprüche, das als ein Werkzeug zum Bohren und/oder für eine Innenbearbeitung durch Drehen ausgebildet ist.

17. Zerspanungswerkzeug (100) nach einem der vorangehenden Ansprüche, das als ein Multifunktionswerkzeug für eine Bohr- und Drehbearbeitung ausgebildet ist.

## Claims

1. Machining tool (100, 100', 200) having
a main body (1), which extends along a longitudinal axis (L) and has a first end (11) for connection to a tool holder and a free second end (12),
wherein the main body (1) has a chip groove (13), which extends from the second end (12) over a part of the axial length in the direction of the first end (11),
wherein, at the second end (12), adjacent to the chip groove (13), a seat (15) is formed for receiving an exchangeable cutting insert (50, 50') in such a way that said insert protrudes from the second end (12) in the axial direction and in the radial direction, **characterized in that** the main body (1) has only one single chip groove (13), which extends over an angular range (a) of less than 180°, preferably less than 150°, more preferably less than 120°, in a section perpendicular to the longitudinal axis (L), such that a remaining land region (14) of the main body (1) extends over an angular range (Θ) of more than 180°, preferably more than 210°, more preferably more than 240°, and
wherein a damping mechanism (20, 20', 20"), which has a mass body (21) supported resiliently and in a damping manner, is arranged in a recess (16) in the land region (14) of the main body (1), at the axial height of the seat (15).

2. Machining tool according to Claim 1, wherein the mass body (21) is supported relative to the main body (1) by a viscoelastic material.

3. Machining tool according to Claim 1 or 2, wherein the mass body (21) is held between two spring-damping elements (22) in such a way that, when the mass body (21) is deflected in directions (X, Z) perpendicular to the longitudinal axis (L) of the main body (1), said spring-damping elements undergo predominantly shear deformation.

4. Machining tool according to Claim 3, wherein the spring-damping elements (22) are spaced apart laterally from the material of the main body (1) with respect to the longitudinal axis (L) of the main body (1) by a gap (23).

5. Machining tool according to one of the preceding claims, wherein the mass body (21) is held in such a way that the resilience is anisotropic in a plane (XZ) perpendicular to the longitudinal axis (L) of the main body (1).

6. Machining tool according to one of the preceding claims, wherein the mass body (21) is held in such a way that there is a first shear stiffness in a first direction (X) perpendicular to the longitudinal axis (L) of the main body (1) and a second shear stiffness, which differs from the first shear stiffness, in a second direction (Z) perpendicular to the longitudinal axis (L) and the first direction (X).

7. Machining tool according to one of the preceding claims, wherein the mass body (21) is mounted in such a way as to be free from direct contact with the material of the main body (1).

8. Machining tool according to one of the preceding claims, wherein the mass body (21) is spaced apart laterally from the material of the main body (1) with respect to the longitudinal axis (L) of the main body (1) by a gap (23).

9. Machining tool according to one of the preceding claims, wherein the recess (16) is formed so as to be closed with respect to the chip groove (13).

10. Machining tool according to one of the preceding claims, wherein the recess (16) is formed so as to be closed with respect to an outer circumference of the main body (1).

11. Machining tool according to one of the preceding claims, wherein the recess (16) is introduced into the main body (1) at the end face, starting from the second end (12), and is closed by a cover (17).

12. Machining tool according to one of the preceding claims, wherein at least one coolant duct (40) for supplying coolant to the second end (12) is formed in the main body (1), and the recess (16) is formed separated from the coolant duct (40).

13. Machining tool according to one of the preceding claims, wherein the mass body (21) has an elongate configuration with a longitudinal axis (Y') which extends substantially parallel to the longitudinal axis (L) of the main body (1).

14. Machining tool according to one of the preceding claims, wherein the centre of gravity (M) of the mass body (21) is spaced apart from the longitudinal axis (L) of the main body (1).

15. Machining tool according to one of the preceding claims, wherein the mass body (21) has a higher density than the material of the tool main body (1).

16. Machining tool (100) according to one of the preceding claims, which is designed as a tool for drilling and/or for internal machining by turning.

17. Machining tool (100) according to one of the preceding claims, which is designed as a multifunction tool for drilling and turning.

## Revendications

1. Outil d'usinage par enlèvement de matière (100, 100', 200) comprenant
un corps de base (1) qui s'étend le long d'un axe longitudinal (L) et présente une première extrémité (11) destinée à être reliée à un porte-outil et une deuxième extrémité libre (12),
dans lequel le corps de base (1) présente une goujure (13) s'étendant depuis la deuxième extrémité (12) sur une partie de la longueur axiale en direction de la première extrémité (11),
dans lequel un siège (15) est formé à la deuxième extrémité (12), adjacent à la goujure (13), pour recevoir une plaquette de coupe interchangeable (50, 50') de telle sorte que celle-ci fasse saillie de la deuxième extrémité (12) dans la direction axiale et dans la direction radiale, **caractérisé en ce que** le corps de base (1) ne présente qu'une seule goujure (13), qui s'étend, dans une coupe perpendiculaire à l'axe longitudinal (L), sur une plage angulaire (a) inférieure à 180°, de préférence inférieure à 150°, plus préférentiellement inférieure à 120°, de sorte qu'une zone de nervure restante (14) du corps de base (1) s'étend sur une plage angulaire (Θ) supérieure à 180°, de préférence supérieure à 210°, plus préférentiellement supérieure à 240°, et
dans lequel un mécanisme d'amortissement (20, 20', 20") est disposé dans un évidement (16), dans la zone de nervure (14) du corps de base (1), à la hauteur axiale du siège (15), et comporte un corps de masse (21) monté de manière élastique et amortie.

2. Outil d'usinage par enlèvement de matière selon la revendication 1, dans lequel le corps de masse (21) est monté par rapport au corps de base (1) par l'intermédiaire d'un matériau viscoélastique.

3. Outil d'usinage par enlèvement de matière selon la revendication 1 ou 2, dans lequel le corps de masse (21) est maintenu entre deux éléments élastiques d'amortissement (22) de telle sorte que ceux-ci subissent principalement une déformation par cisaillement lors d'un déplacement du corps de masse (21) dans des directions (X, Z) perpendiculaires à l'axe longitudinal (L) du corps de base (1).

4. Outil d'usinage par enlèvement de matière selon la revendication 3, dans lequel les éléments élastiques d'amortissement (22) sont espacés latéralement, par rapport à l'axe longitudinal (L) du corps de base (1), du matériau du corps de base (1) par un interstice (23).

5. Outil d'usinage par enlèvement de matière selon l'une des revendications précédentes, dans lequel le corps de masse (21) est maintenu de telle sorte que la souplesse dans un plan (XZ) perpendiculaire à l'axe longitudinal (L) du corps de base (1) soit anisotrope.

6. Outil d'usinage par enlèvement de matière selon l'une des revendications précédentes, dans lequel le corps de masse (21) est maintenu de telle sorte qu'une première rigidité en cisaillement soit présente dans une première direction (X) perpendiculaire à l'axe longitudinal (L) du corps de base (1) et qu'une deuxième rigidité en cisaillement, différente de la première rigidité en cisaillement, soit présente dans une deuxième direction (Z) perpendiculaire à l'axe longitudinal (L) et à la première direction (X).

7. Outil d'usinage par enlèvement de matière selon l'une des revendications précédentes, dans lequel le corps de masse (21) est monté sans contact direct avec le matériau du corps de base (1).

8. Outil d'usinage par enlèvement de matière selon l'une des revendications précédentes, dans lequel le corps de masse (21) est espacé latéralement, par rapport à l'axe longitudinal (L) du corps de base (1), du matériau du corps de base (1) par un interstice (23).

9. Outil d'usinage par enlèvement de matière selon l'une des revendications précédentes, dans lequel l'évidement (16) est fermé du côté de la goujure (13).

10. Outil d'usinage par enlèvement de matière selon l'une des revendications précédentes, dans lequel l'évidement (16) est fermé du côté d'une périphérie extérieure du corps de base (1).

11. Outil d'usinage par enlèvement de matière selon l'une des revendications précédentes, dans lequel l'évidement (16) est ménagé dans le corps de base (1) depuis la deuxième extrémité (12), du côté de la face d'extrémité, et est fermé par un couvercle (17).

12. Outil d'usinage par enlèvement de matière selon l'une des revendications précédentes, dans lequel au moins un canal de fluide de refroidissement (40) destiné à acheminer du fluide de refroidissement vers la deuxième extrémité (12) est formé dans le corps de base (1) et l'évidement (16) est formé séparément du canal de fluide de refroidissement (40).

13. Outil d'usinage par enlèvement de matière selon l'une des revendications précédentes, dans lequel le corps de masse (21) présente une configuration allongée avec un axe longitudinal (Y') qui s'étend sensiblement parallèlement à l'axe longitudinal (L) du corps de base (1).

14. Outil d'usinage par enlèvement de matière selon l'une des revendications précédentes, dans lequel le centre de masse (M) du corps de masse (21) est espacé de l'axe longitudinal (L) du corps de base (1).

15. Outil d'usinage par enlèvement de matière selon l'une des revendications précédentes, dans lequel le corps de masse (21) présente une masse volumique supérieure à celle du matériau du corps de base de l'outil (1).

16. Outil d'usinage par enlèvement de matière (100) selon l'une des revendications précédentes, qui est conçu comme un outil de perçage et/ou d'usinage intérieur par tournage.

17. Outil d'usinage par enlèvement de matière (100) selon l'une des revendications précédentes, qui est conçu comme un outil multifonction pour un usinage par perçage et tournage.
